(19) Europäisches Patentamt / European Patent Office / Office européen des brevets

(11) **EP 2 395 322 B1**

(12) **FASCICULE DE BREVET EUROPEEN**

(45) Date de publication et mention de la délivrance du brevet:
**21.03.2018 Bulletin 2018/12**

(51) Int Cl.:
**G01C 19/34** *(2006.01)*   **G01C 19/42** *(2006.01)*
**G01C 21/16** *(2006.01)*

(21) Numéro de dépôt: **11004401.3**

(22) Date de dépôt: **30.05.2011**

(54) **Dispositif de mesure inertielle amélioré et aéronef comportant un tel dispositif**

Verbesserte Vorrichtung zur Trägheitsmessung, und eine solche Vorrichtung umfassendes Luftfahrzeug

Improved inertial measurement device and aircraft carrying such a device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.06.2010 FR 1002497**

(43) Date de publication de la demande:
**14.12.2011 Bulletin 2011/50**

(73) Titulaire: **Airbus Helicopters**
**13725 Marignane Cedex (FR)**

(72) Inventeurs:
• **Petillon, Jean Paul**
**13140 Miramas (FR)**
• **Carayon, Antoine**
**13580 La Fare Les Oliviers (FR)**

(74) Mandataire: **Pouillot, Laurent Pierre Paul**
**GPI & Associés**
**1330, Rue Guillibert de la Lauzière**
**EuroParc de Pichaury, Bât B2**
**13856 Aix-en-Provence Cedex 3 (FR)**

(56) Documents cités:
**WO-A2-2007/111978    US-A- 3 424 010**
**US-A- 3 509 765**

**Description**

L'invention se rapporte au domaine technique général des systèmes et des mesures inertielles pour l'aéronautique et plus particulièrement pour les aéronefs, du genre avion, giravion ou hélicoptère.

L'invention concerne plus particulièrement un dispositif de mesure inertielle destiné à être embarqué dans un aéronef.

Le pilotage et le guidage d'un aéronef requièrent que le pilote ait une perception objective des angles d'inclinaison et de cap de son aéronef.

En vol à vue, les angles d'inclinaison peuvent être perçus directement par la vision de l'environnement extérieur. Le cap et la variation de cap peuvent aussi être estimés grâce à des repères au sol. L'utilisation d'un compas magnétique permet une estimation absolue et est indispensable à la navigation dans la majorité des cas.

En vol sans visibilité, des instruments spécifiques sont nécessaires pour pallier la disparition des repères visuels extérieurs. En ce qui concerne les angles d'inclinaison et de cap, l'instrument en question est appelé AHRS (Attitude and Heading Reference System) associé à un écran de visualisation appelé MFD (Multi Function Display).

La fabrication d'un instrument AHRS impose d'utiliser des gyromètres d'une précision (ou dérive) de l'ordre de quelques degrés par heure. Pendant les deux dernières décennies, les gyromètres FOG (Fiber Optic Gyro) remplissaient parfaitement ce rôle, avec des dérives souvent inférieures au degré par heure.

Avec l'avènement de la technologie appelée MEMS (Micro Electro Mechanical System), on a vu apparaître des gyromètres dont le prix est du même ordre de grandeur que celui d'un circuit intégré en silicium monolithique (les procédés de fabrication étant les mêmes), à savoir un prix extrêmement bas.

Par contre, le biais (ou dérive) de tels gyromètres, d'une mise sous tension à l'autre (appelé « run to run ») se compte souvent en milliers de degrés par heure, tandis que la stabilité du biais en cours de fonctionnement (appelé « in run ») est au mieux d'une dizaine de degrés par heure et souvent d'une centaine de degrés par heure sous l'effet des variations rapides de température. Il manque donc encore un facteur dix, sur la stabilité de biais dans cette technologie MEMS, pour atteindre les performances des instruments AHRS à haute intégrité tel que ceux requis pour les opérations sans visibilité dites I.F.R. (Instrument Flight Rules).

Sur les trois axes de mesure, à savoir l'axe de lacet, l'axe de roulis et l'axe de tangage, c'est l'axe de lacet qui réclame le plus de précision, puisqu'un instrument AHRS a souvent vocation à fournir un cap, y compris en l'absence de magnétomètre. Un tel mode de fonctionnement est appelé mode directionnel. Les règles de certification d'un aéronef exigent, dans ce mode de fonctionnement, une dérive inférieure à quinze degrés par heure. Or une telle performance n'est pas atteinte de manière fiable et répétitive avec les gyromètres connus incorporant la technologie MEMS.

Citons quelques documents relatifs à des dispositifs connus.

Le document US3509765 décrit un système de navigation inertiel, avec un moteur monté sur une tourelle qui supporte elle-même un « gyroscope d'axe Z ». Selon ce document, l'axe de l'équipage en rotation est stabilisé par rapport à un repère inertiel pour rester à la verticale en repère terrestre. Pour parvenir à ceci, un système complexe de cardans (« system gimbaled ») est prévu. Un système selon ce document permet une grande précision malgré une vitesse de rotation sensiblement plus élevée que la rotation terrestre.

Le document WO2007111978 décrit un système de mesure inertiel apte à supprimer le biais de gyromètres. Selon ce document, on provoque cette suppression par un mouvement oscillatoire ou de battement, avec une amplitude pouvant atteindre des dizaines de degrés, avec une fréquence qui doit être plus élevée que les vitesses de rotation à mesurer. Le document US3424010 décrit un équipage mobile en rotation autour d'un axe fixe par rapport à la structure d'aéronef (système dit « strapdown »).

Ce document US3424010 prévoit deux gyroscopes montés à 90° et tournant par rapport à un axe perpendiculaire au plan de mesure des deux vitesses de rotations, données par les deux gyroscopes.

Ce document US3424010 permet d'atténuer les biais de mesure de deux des trois composantes de vitesse angulaire, mais il est basé sur une vitesse de rotation rapide puisque supérieure à la vitesse angulaire maximale de l'aéronef porteur. Un tel dispositif, n'étant pas basé sur une vitesse de rotation inertielle constante, a des performances médiocres. En outre, la vitesse de rotation élevée qui est requise génère une usure rapide des mécanismes ainsi qu'une consommation électrique élevée.

Pour réduire les instabilités des biais des gyromètres MEMS, on connaît par exemple par l'intermédiaire du document JP02078961 (Angular velocity detecting device), des dispositifs où l'on compense les variations de biais par une mesure de la température associée à une table d'interpolation. Ces dispositifs présentent l'inconvénient lié au fait que la courbe de sensibilité du biais à la température n'est pas stable au cours du temps, et qu'il faut procéder à des calibrations périodiques pour pallier les effets du vieillissement.

On connaît aussi, par exemple par l'intermédiaire du document FR2832136 (Dispositif d'encapsulation hermétique de composant devant être protégé de toutes contraintes), des dispositifs faisant appel à une régulation en température. De tels dispositifs nécessitent une puissance électrique élevée et un temps de stabilisation thermique prohibitif au démarrage.

On connaît aussi, par exemple par l'intermédiaire du document US7066004, un dispositif de mesure inertiel comportant l'assemblage de gyromètres et d'actuateurs en technologie MEMS, pour éliminer un biais en phase statique ou dynamique. Du fait de la difficulté de réaliser en technologie MEMS des paliers autorisant une liberté de rotation complète autour d'un axe, le dispositif décrit dans ce document est basé sur des mouvements de rotation d'amplitude limitée, intermittents et de directions alternées. Les charnières autorisant les mouvements de rotation alternée sont constituées d'éléments flexibles. Ces éléments flexible, en technologie MEMS, sont typiquement des structures en silicium de taille micrométrique, présentant une grande fragilité en cas de choc.

L'invention a alors pour objet de proposer une mesure inertielle permettant de s'affranchir des limitations mentionnées ci-dessus, et ce quelle que soit la technologie utilisée, de manière à atténuer significativement voire supprimer le biais de mesure.

A cet effet, l'invention définit un dispositif de mesure inertielle selon la revendication 1, un procédé de mesure inertielle selon la revendication 15, une unité de mesure selon la revendication 18, une centrale de références primaires selon la revendication 19 et un aéronef selon la revendication 20.

En particulier, l'invention a pour objet de proposer un nouveau dispositif de mesure inertielle utilisant la technologie MEMS, permettant de s'affranchir des limitations mentionnées ci-dessus, tout en améliorant ses performances.

Un autre objet de l'invention vise à fournir un nouveau dispositif de mesure inertielle présentant des performances remarquables tout en affichant un prix de revient extrêmement bas.

Les objets assignés à l'invention sont atteints à l'aide d'un dispositif de mesure inertielle solidaire d'une structure d'un véhicule pour lequel il convient de mesurer des vitesses angulaires et/ou accélérations linéaires, comportant au moins un équipage mobile en rotation autour d'un axe fixe Y par rapport à la structure de repère X,Y,Z, ledit équipage mobile comportant au moins deux moyens de mesure dont les axes de sensibilité respectifs X' et Z' sont orthogonaux entre eux et situés dans un plan perpendiculaire à l'axe de rotation fixe Y, un moteur électrique pour entraîner en rotation l'équipage mobile, un moyen pour déterminer la position angulaire de l'équipage mobile par rapport à la structure et des moyens de calcul pour déterminer à partir de la position angulaire de l'équipage mobile, la projection des mesures réalisées selon les axes tournants X' et Z' par lesdits au moins deux moyens de mesure sur les axes fixe X et Z de la structure, caractérisé en ce que le moteur comporte des moyens pour commander au moins une vitesse de rotation inertielle de l'équipage mobile de telle sorte que les fonctions sinus et cosinus de l'angle de l'équipage mobile par rapport au repère inertiel soient sensiblement nulles en moyennes sur un nombre entier de tours, la vitesse de rotation étant supérieure à une valeur de référence, ladite valeur référence imposant un décalage en fréquence du biais des moyens de mesure, ledit décalage étant supérieur à la largeur de bande de l'instabilité des biais desdits moyens de mesure.

Selon un exemple de réalisation du dispositif de mesure inertielle conforme à l'invention, on contrôle le moteur par des moyens permettant une vitesse de rotation sensiblement constante dans le repère inertiel, de l'équipage mobile.

Selon un autre exemple de réalisation du dispositif de mesure inertielle conforme à l'invention, l'équipage mobile est un substrat tournant constituant le rotor du moteur électrique sur lequel sont agencés au moins deux moyens de mesure et des aimants permanents.

Selon un exemple de réalisation du dispositif de mesure inertielle conforme à l'invention, les moyens de mesure sont des gyromètres.

Selon un autre exemple de réalisation du dispositif de mesure inertielle conforme à l'invention, les moyens de mesure de sont des accéléromètres.

Selon un autre exemple de réalisation du dispositif de mesure inertielle conforme à l'invention, les moyens de mesure comportent chacun un gyromètre et un accéléromètre.

Les biais des accéléromètres sont généralement moins influents sur l'erreur d'un instrument AHRS, mais si l'on considère le coût de la mécanique permettant la rotation d'un équipage mobile, le surcoût pour embarquer sur ledit équipage mobile deux accéléromètres devient négligeable. En outre, le fait d'embarquer sur un équipage mobile deux gyromètres et deux accéléromètres permet d'améliorer la précision desdits gyromètres et/ou de diminuer le coût de leur étalonnage, du genre compensation en température.

Selon un exemple de réalisation du dispositif de mesure inertielle conforme à l'invention, l'axe Y s'étend selon une direction latérale du véhicule du genre aéronef, correspondant à son axe de tangage et les axes X et Z sur lesquels sont projetées les mesures effectuées selon les axes de sensibilité tournants X' et Z', correspondent respectivement à l'axe de roulis et à l'axe de lacet dudit véhicule ou aéronef, les projections des mesures des moyens de mesure tournants sur lesdits axes X et Z étant substantiellement dépourvues de biais.

Selon un exemple de réalisation conforme à l'invention, le dispositif de mesure inertielle comporte un moyen de mesure complémentaire fixé sur un support fixe de la structure et présentant un axe de sensibilité fixe par rapport à la structure, lequel est dirigé selon l'axe Y et est perpendiculaire au plan de rotation de l'équipage mobile.

Selon un autre exemple de réalisation conforme à l'invention, l'équipage mobile comporte un moyen de mesure complémentaire solidaire en rotation de l'équipage mobile et présentant un axe de sensibilité tournant confondu avec l'axe Y et perpendiculaire au plan de rotation de l'équipage mobile, ledit moyen de mesure complémentaire servant à réguler si nécessaire la vitesse de rotation inertielle de l'équipage mobile.

A titre d'exemple, le moyen de mesure complémentaire comporte au moins un gyromètre.

A titre de variante, le dispositif de mesure inertielle conforme à l'invention, comprend un second équipage mobile en rotation autour de l'axe X, fixe par rapport à la structure, ledit second équipage mobile comportant au moins deux moyens de mesure dont les axes de sensibilité respectifs Y' et Z' sont orthogonaux entre eux et situés dans un plan perpendiculaire à l'axe de rotation X fixe, la projection des mesures des moyens de mesure tournants sur lesdits axes Y et Z étant alors substantiellement dépourvue de biais.

Selon un exemple de réalisation du dispositif de mesure inertielle conforme à l'invention, l'axe Y est compris dans un plan formé par les axes de roulis et de tangage du véhicule du genre aéronef.

Selon un exemple de réalisation du dispositif de mesure inertiel conforme à l'invention, le moyen pour déterminer la position angulaire de l'équipage mobile par rapport à la structure du véhicule est un capteur absolu de mesure d'angles sans contact, par exemple basé sur des capteurs à effet Hall, par exemple commercialisé par la société Austria Microsystem, sous la référence AS5043.

Selon une variante de réalisation du dispositif de mesure inertiel conforme à l'invention, le moyen pour déterminer la position angulaire de l'équipage mobile par rapport à la structure du véhicule est basé sur les capteurs à effet hall du moteur sans balais, permettant une mesure modulo le pas polaire. Dans ce cas là, un capteur tout ou rien tel qu'une diode électroluminescente associée à un phototransistor permet de lever l'ambiguïté du pas polaire et de retrouver une mesure absolue.

Selon un exemple de réalisation du dispositif de mesure inertiel conforme à l'invention, les moyens de mesure sont des capteurs basés sur la technologie MEMS du genre gyromètres MEMS.

Selon un exemple de réalisation conforme à l'invention, le dispositif de mesure inertiel comprend des moyens inductifs pour alimenter électriquement au moins un équipage mobile d'une part et pour transférer les mesures effectuées, d'au moins un équipage mobile vers une unité électronique fixe d'autre part.

Selon un exemple de réalisation du dispositif de mesure inertiel conforme à l'invention, ledit dispositif comporte des moyens de traitement additionnels pour supprimer la raie apparaissant à la fréquence de rotation inertielle de l'équipage mobile.

Les objets assignés à l'invention sont également atteints à l'aide d'un procédé de mesure inertiel d'un véhicule ou aéronef pour lequel il convient de mesurer des vitesses et/ou accélérations, consistant à mettre en rotation au moins un équipage mobile en autour d'un axe de rotation Y fixe par rapport à une structure de repère X,Y,Z, ledit équipage mobile comportant au moins deux moyens de mesure dont les axes de sensibilité respectifs X' et Z' sont orthogonaux entre eux et situés dans un plan perpendiculaire à l'axe de rotation fixe Y, à déterminer la position angulaire de l'équipage mobile par rapport à la structure et à déterminer à partir de la position angulaire de l'équipage mobile, la projection des mesures réalisées selon les axes tournants X',Z' par lesdits au moins deux moyens de mesure, sur les axes fixes X et Z de la structure, caractérisé en ce qu'il consiste à commander au moins une vitesse de rotation inertielle de l'équipage mobile de telle sorte que les fonctions sinus et cosinus de l'angle de l'équipage mobile par rapport au repère inertiel soient sensiblement nulles en moyennes sur un nombre entier de tours, la vitesse de rotation inertielle étant supérieure à une valeur de référence imposant un décalage en fréquence du biais des moyens de mesure, ledit décalage étant supérieur à la largeur de bande de l'instabilité des biais desdits moyens de mesure.

Les objets assignés à l'invention sont également atteints à l'aide d'un procédé de commande et de régulation pour asservir sur une consigne, la vitesse de rotation inertielle du moteur électrique d'un dispositif de mesure inertiel tel que présenté ci-dessus, caractérisé en ce qu'il consiste à:

- fixer la consigne et à mesurer la vitesse de rotation inertielle,

- utiliser une boucle de régulation interne pour amplifier la différence entre la consigne et la vitesse de rotation inertielle, pour commander en couple le moteur électrique, délivrant ainsi en sortie de ladite boucle de régulation interne, la vitesse de rotation inertielle,

- effectuer une intégration sur la vitesse de rotation inertielle, de manière à obtenir l'angle de rotation inertiel $\beta$,

- calculer les fonctions cosinus et sinus de l'angle de rotation inertiel, $\sin\beta$ et $\cos\beta$,

- calculer les intégrales Is et Ic des fonctions sinus et de cosinus précédentes,

- identifier les coordonnées Xc et Yc du centre du cercle défini par les valeurs des intégrales précédentes,

- appliquer un gain négatif k sur Xc et sur Yc et calculer un terme correctif qui est fonction de k, Xc, Yc et $\beta$, par exemple égal à $k.Xc.\sin\beta + k.Yc.\cos\beta$,

- et additionner le terme correctif précédent à la consigne pour rétroagir sur la boucle de régulation interne de manière à ce que les intégrales Is et Ic soient nulles en moyenne sur un nombre entier de tours.

Selon un exemple de mise en oeuvre du procédé conforme à l'invention, l'identification des coordonnées Xc et Yc est obtenue par la méthode des moindres carrées.

Les objets assignés à l'invention sont également atteints à l'aide d'une unité de mesure inertielle ou IMU (Inertial Measurement Unit), caractérisée en ce qu'elle comporte au moins deux dispositifs de mesure inertielle conformes à l'une quelconque des revendications 1 à 14 et en ce que les axes de rotation desdits deux dispositifs sont perpendiculaires entre eux de manière que l'IMU produise une mesure avec un bais atténué sur les trois dimensions.

Les objets assignés à l'invention sont également atteints à l'aide d'un équipement du genre centrale de références primaires ou unité AHRS ou d'un aéronef comportant un dispositif de mesure inertiel tel que présenté ci-dessus.

Un avantage du dispositif de mesure inertiel conforme à l'invention, réside dans la suppression de ses biais de mesure.

Un autre avantage du dispositif de mesure inertiel conforme à l'invention, est lié à sa sûreté de fonctionnement. En effet, lors une panne de fonctionnement du moteur entraînant l'équipage mobile, le dispositif est dans une situation où l'angle de rotation n'est plus contrôlé, mais quand même mesuré, de manière que le dispositif continue à délivrer, comme pour les dispositifs connus, trois mesures selon des directions orthogonales fixes par rapport à la structure, sous réserve que le capteur d'angle ne soit pas altéré.

Un autre avantage du dispositif de mesure inertiel conforme à l'invention réside dans la possibilité d'utiliser des gyroscopes de moins bonne qualité, du genre gyromètres MEMS, lesquels autoriseront une implémentation miniaturisée dudit dispositif, tout en présentant une précision équivalente à celle des gyromètres à technologie FOG, une consommation moindre et une fiabilité bien supérieure.

Un autre avantage du dispositif de mesure inertiel conforme à l'invention, est qu'il permet de s'affranchir de phases de stabilisation en température, tout en apportant des performances significativement plus élevées. Le dispositif est ainsi immédiatement opérationnel à la mise sous tension.

Un autre avantage du dispositif de mesure inertiel conforme à l'invention, est qu'il permet de s'affranchir de compensations précises en température, d'où une grande robustesse au vieillissement et l'élimination de toutes maintenances préventives telles que des réétalonnages périodiques.

Un autre avantage du dispositif de mesure inertiel conforme à l'invention réside dans l'utilisation d'une vitesse de rotation inertielle de l'équipage tournant, inférieure au taux de manoeuvre maximal de l'aéronef ou du véhicule. On diminue ainsi l'usure des mécanismes et on augmente la précision du dispositif dans la mesure où la vitesse de rotation inertielle est prise en considération.

Un autre avantage du dispositif de mesure inertiel conforme à l'invention réside dans son insensibilité au vieillissement correspondant à une dégradation au cours du temps de la sensibilité résiduelle à la température. Le dispositif conforme à l'invention se comporte comme un moyen d'étalonnage permanent.

Le procédé de commande et de régulation conforme à l'invention présente l'avantage de ne pas générer une consommation électrique importante du moteur électrique tout en n'altérant pas la précision de la commande. En effet, on cherche à limiter les courants électriques dans les bobines du moteur électrique à des valeurs aussi faibles que possibles. En conséquence, la boucle de régulation interne n'a qu'une faible autorité de couple et la vitesse de rotation inertielle sera inévitablement perturbée par la dynamique du porteur, laquelle est influencée notamment par des variations des frottements des paliers et des courants de Foucault. Ces perturbations sont compensées grâce au procédé de commande et de régulation conforme à l'invention.

L'invention et ses avantages apparaîtront avec plus de détails dans le cadre de la description qui suit avec des exemples de réalisation donnés à titre illustratif et non limitatif, en référence aux figures annexées qui représentent :

- la figure 1, un exemple d'installation dans un aéronef, de gyromètres dans un dispositif de mesure inertiel selon l'art antérieur,

- la figure 2a, une illustration schématique d'un exemple de réalisation d'un dispositif de mesure inertiel conforme à l'invention, comportant deux moyens de mesure tournants et un moyen de mesure complémentaire fixe,

- la figure 2b, une autre illustration schématique du dispositif de mesure inertiel de la figure 2a,

- la figure 3, une illustration schématique d'un traitement de données issues d'un dispositif de mesure inertiel conforme à l'invention selon la figure 2a ou 2b,

- la figure 4, une illustration d'une loi de commande simplifiée du moteur d'un dispositif de mesure inertiel conforme à l'invention selon la figure 2a ou 2b,

- la figure 5, une illustration d'une autre loi de commande du moteur d'un dispositif de mesure inertiel conforme à l'invention selon la figure 2a ou 2b, ladite loi de commande permettant de compenser l'effet des fluctuations de la vitesse de rotation inertielle,

- la figure 6, une représentation schématique de la densité spectrale de puissance du bruit directement à la sortie d'un gyromètre, essentiellement constituée d'un biais correspondant à la composante continue symbolisée par une flèche verticale (dite impulsion de Dirac) et de composantes à basse fréquence illustrées par une courbe en cloche centrée sur la fréquence nulle,

- la figure 7, une représentation schématique de la densité spectrale de puissance de bruit à la sortie du dispositif conforme à l'invention, cette densité spectrale ayant la particularité de présenter très peu d'énergie autour de la composante continue,

- la figure 8, une illustration d'un autre exemple de réalisation d'un dispositif de mesure inertiel conforme à l'invention,

- la figure 9, une illustration schématique d'un traitement de données issues d'un dispositif de mesure inertiel conforme à l'invention selon la figure 8,

- la figure 10, une illustration schématique d'un traitement complémentaire optionnel des données issues d'un dispositif de mesure inertiel conforme à l'invention, permettant en outre de supprimer la raie de bruit résultant de la mise en rotation,

- et la figure 11, une illustration partielle en coupe d'un exemple de réalisation d'un moyen inductif, d'alimentation et de transfert de données, d'un dispositif de mesure inertiel conforme à l'invention.

Les éléments, structurellement et fonctionnellement identiques, présents dans plusieurs figures distinctes, sont affectés d'une seule et même référence numérique ou alphanumérique.

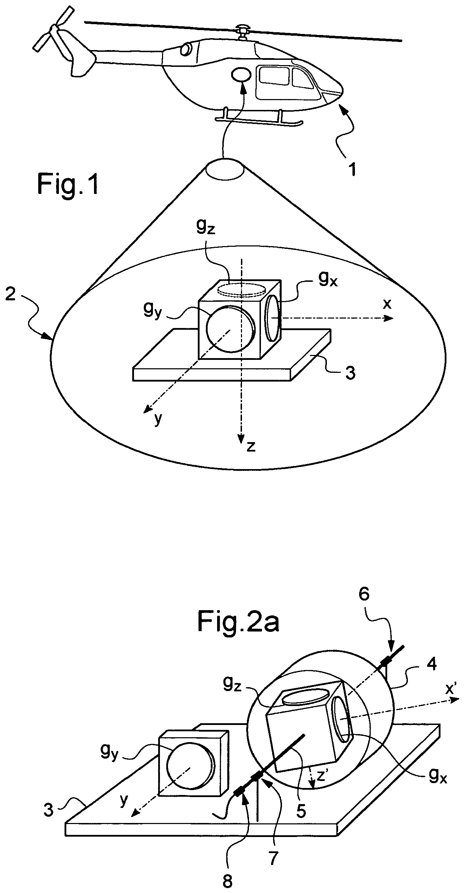

La figure 1 est une illustration d'un exemple d'installation dans un aéronef, de gyromètres selon l'art antérieur.

Un hélicoptère 1 ou un aéronef comporte un instrument AHRS 2. Ce dernier comprend des gyromètres gx, gy, gz fixes par rapport au fuselage dudit hélicoptère 1, montés sur un support 3 solidaire de la structure de l'hélicoptère 1. Par structure on entend également le fuselage d'un aéronef. Les gyromètres gx, gy, gz présentent respectivement un axe de sensibilité orienté selon les directions respectives X,Y,Z définissant un repère X,Y,Z lié à la structure de l'hélicoptère 1.

La figure 2a est une illustration schématique d'un exemple de réalisation d'un dispositif de mesure inertiel conforme à l'invention comportant un gyromètre gy monté fixe sur le support 3 et dont l'axe de sensibilité est dirigé selon la direction latérale Y.

Les gyromètres gx et gz sont installés dans un tambour 4, constituant ainsi un équipage mobile en rotation autour d'un axe 5 de l'hélicoptère, dans cette figure et à titre d'exemple l'axe latéral, c'est-à-dire parallèle à la direction Y.

Les axes de sensibilité X' et Z' des gyromètres gx et gz sont orthogonaux entre eux et situés dans un plan perpendiculaire à l'axe de rotation latéral 5. Le plan défini par les axes X',Z' tournants est ainsi toujours confondu avec le plan défini par les axes X,Z et ce quel que soit l'angle $\alpha$ que fait le tambour 4 par rapport à la structure de l'hélicoptère 1. On définit également un angle $\beta$ correspondant à la position angulaire du tambour 4 par rapport à un repère inertiel.

Le tambour 4 est entraîné en rotation par un moteur 6 électrique sans balai et à entraînement direct. Le moteur 6 comporte des moyens pour commander au moins une vitesse de rotation $\omega_i$ de l'équipage mobile, sensiblement constante par rapport à un repère inertiel.

La vitesse de rotation inertielle $\omega_i = d\beta/dt$ du tambour 4 par rapport à un repère inertiel peut être très faible, de manière que la puissance requise du moteur soit très faible également. Ceci influence positivement l'usure des paliers correspondants. Il suffit que ladite vitesse de rotation inertielle soit significativement supérieure à la largeur de bande de fréquence de l'instabilité du biais du gyromètre, soit quelques milli-hertz, c'est-à-dire une vitesse de rotation inertielle comprise par exemple entre 10 et 60 tr/mn.

La position angulaire $\alpha$ du tambour 4 par rapport à la structure est mesurée par un capteur absolu sans contact 7, du genre capteur à effet Hall. L'angle $\alpha$ est mesuré par rapport à la structure. Il correspond à l'angle formé par les axes X et X'.

Le capteur absolu de mesure d'angles sans contact est par exemple basé sur des capteurs à effet Hall, par exemple commercialisé par la société Austria Microsystem, sous la référence AS5043.

Selon une variante de réalisation du dispositif de mesure inertielle conforme à l'invention, le moyen pour déterminer la position angulaire de l'équipage mobile par rapport à la structure du véhicule est basé sur les capteurs à effet hall du moteur 6 sans balais, permettant une mesure modulo le pas polaire. Dans ce cas là, un capteur tout ou rien tel qu'une diode électroluminescente associée à un phototransistor permet de lever l'ambiguïté du pas polaire et de retrouver une mesure absolue.

Une alimentation électrique 8 des gyromètres gx et gz ainsi qu'une collecte des mesures effectuées par lesdits gyromètres gx et gz sont réalisées par un ou des moyens inductifs, donc sans contact.

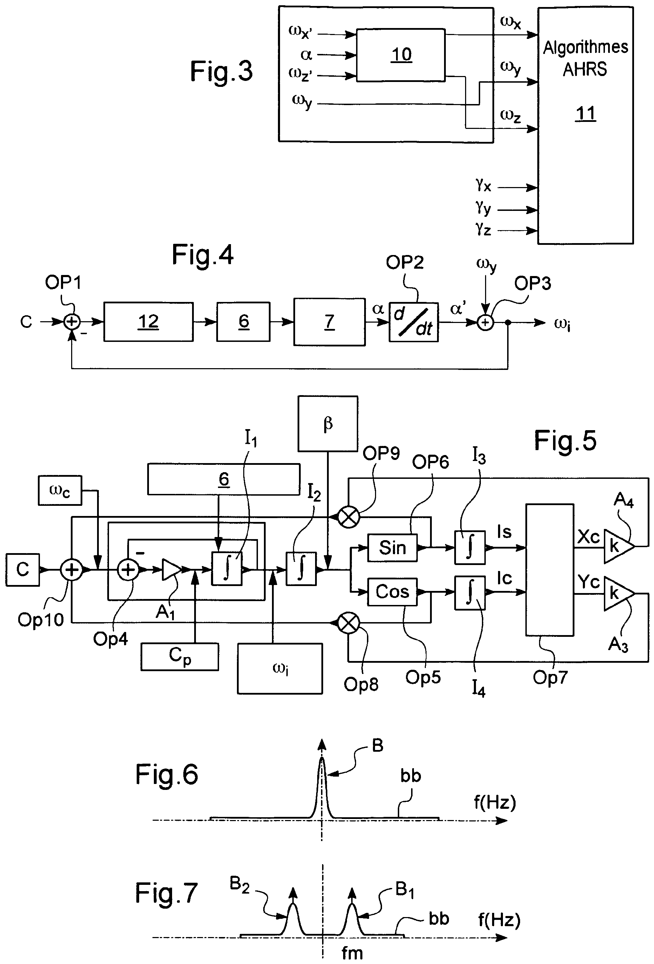

La figure 3 est une illustration schématique d'un traitement de données issues d'un dispositif de mesure inertiel conforme à l'invention selon la figure 2a.

Le dispositif conforme à l'invention comporte également des moyens de calcul pour déterminer à partir de la position angulaire $\alpha$ de l'équipage mobile, la projection des mesures réalisées selon les axes tournants X',Z' par lesdits au moins deux moyens de mesure, sur les axes X et Z de la structure du véhicule. Ces mesures ou composantes angulaires de vitesse de rotation autours des axes fixes X,Z sont alors exprimées par rapport au repère du fuselage.

Les moyens de calcul comportent à cet effet une unité de prétraitement 10 pour effectuer un prétraitement des mesures issues des gyromètres tournants gx et gz.

Dans la suite, $\omega_x$ désigne la composante de vitesse angulaire inertielle de la structure autour de l'axe X, $\omega_z$ désigne la composante de vitesse angulaire inertielle de la structure autour de l'axe Z et $\omega_y$ désigne la composante de vitesse angulaire inertielle de la structure autour de l'axe Y.

L'unité de prétraitement 10 acquière d'une part des mesures des composantes de vitesse angulaire inertielle de l'équipage mobile $\omega_{x'}$ et $\omega_{z'}$ autour des axes X' et Z', lesdites mesures étant issues des gyromètres tournants gx et gz et d'autre part l'angle $\alpha$ du tambour 4 issu du capteur absolu sans contact 7. L'unité de prétraitement 10 délivre alors les mesures des composantes de vitesse angulaire inertielle de la structure rapportées aux axes X,Z, à savoir $\omega_x$ et $\omega_z$. Le traitement effectué par l'unité 10 est une opération de projection, ou de changement de repère, qui peut s'exprimer mathématiquement par une multiplication matricielle telle que présentée ci-dessous :

$$\begin{bmatrix} \omega_x \\ \omega_z \end{bmatrix} = \begin{bmatrix} \cos\alpha & -\sin\alpha \\ \sin\alpha & \cos\alpha \end{bmatrix} \times \begin{bmatrix} \omega_{x'} \\ \omega_{z'} \end{bmatrix}$$

Les mesures des composantes de vitesse angulaire autour des axes respectifs X,Y,Z, à savoir $\omega_x$, $\omega_z$ qui ont subi le changement de repère, et la composante $\omega_y$ issue directement du gyromètre gy, sont ensuite transmises à une unité de traitement 11. Cette unité de traitement 11 met en oeuvre des algorithmes spécifiques aux instruments AHRS et connus en tant que tel. On pourra par exemple se reporter au document EP 0 292 339 B1 se rapportant à une centrale d'attitude intégrée pour aérodyne. Ces algorithmes requièrent également de traiter des composantes d'accélération $\gamma_x$, $\gamma_y$, $\gamma_z$.

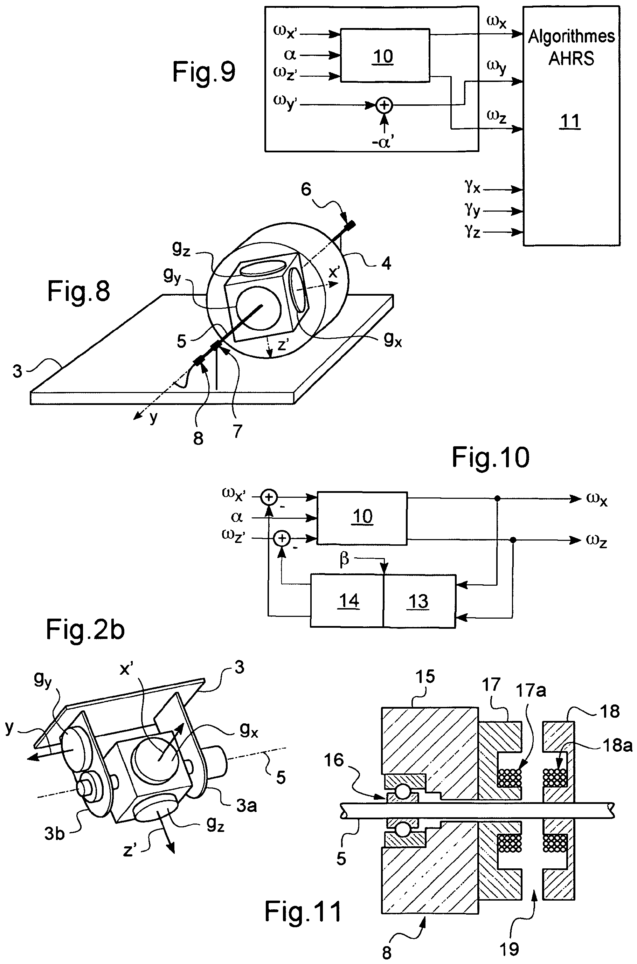

La figure 4 est une illustration d'une loi de commande simplifiée du moteur 6 d'un dispositif de mesure inertiel conforme à l'invention selon la figure 2, laquelle permet de commander une vitesse de rotation angulaire inertielle $\omega_i$ du tambour 4, sensiblement constante.

Une consigne de vitesse C ou $\omega_c$ arrive en entrée d'un opérateur Op1 qui soustrait à ladite consigne C la valeur actuelle de la vitesse de rotation inertielle $\omega_i$. La vitesse de rotation inertielle $\omega_i$ correspond à la vitesse angulaire du tambour 4 par rapport au repère inertiel. On a donc $\omega_i = \omega_y + d\alpha/dt = d\beta/dt$, $d\alpha/dt=\alpha'$ étant la dérivée par rapport au temps de l'angle $\alpha$ et $d\beta/dt$ étant la dérivée par rapport au temps de l'angle $\beta$.

Le soustracteur Op1 délivre ensuite un signal correspondant à C- $\omega_i$, à des moyens de commande 12, lesquels vont piloter le moteur 6 de manière à annuler ledit signal d'écart.

Le capteur absolu 7 et un dérivateur Op2, déterminent la vitesse de rotation $\alpha'=d\alpha/dt$ du tambour 4 autour de l'axe latéral 5. La vitesse de rotation inertielle

$\omega_i$, est obtenue ensuite en ajoutant la composante de vitesse angulaire $\omega_y$ à $\alpha'$ à l'aide d'un sommateur Op3.

Selon un exemple de réalisation, la rotation du tambour 4 est entretenue à une vitesse constante par rapport au repère inertiel, par un moteur 6 sans balai et à entraînement direct. Cette vitesse de rotation est de l'ordre de 10 à 60 tours/minute soit 60 à 360°/s, ce qui peut être inférieur au taux maximal de manoeuvre ou d'évolution de l'hélicoptère. A titre d'exemple, un taux de manoeuvre agressif en roulis d'un aéronef est de l'ordre de 100°/s.

A titre d'exemple, si la consigne C est de 60°/s et que l'aéronef évolue dans une fourchette comprise entre -100°/s et +100°/s, alors la vitesse angulaire du tambour 4 par rapport à la structure $d\alpha/dt$ est comprise dans l'intervalle de -40°/s à +160°/s, tandis que la vitesse angulaire inertielle du tambour 4 est maintenue à 60°/s.

La figure 5 est une boucle de régulation basée sur une loi de commande du moteur 6 d'un dispositif de mesure inertiel conforme à l'invention selon la figure 2a ou 2b, ladite loi de commande permettant de compenser des fluctuations de la vitesse de rotation inertielle $\omega_i$. La figure 5 sera décrite en détails plus loin dans la présente.

La figure 6 est une illustration schématique de la densité spectrale de puissance à la sortie d'un gyromètre. On y relève l'effet d'un biais B instable, accompagné d'un bruit blanc bb. Les erreurs de gyromètres les plus gênantes pour un instrument AHRS sont le biais de fréquence nulle et l'instabilité de biais de fréquence très faible, la constante de temps de corrélation des instabilités de biais de gyromètres MEMS sont typiquement de l'ordre de 100 secondes, ce qui correspond à une largeur de bande de $\pm$1,6 mHz. L'ordonnée est exprimée par exemple en $(°/h)^2$/Hz (degré par heure au carré et par Hertz).

Avec le dispositif de mesure inertielle conforme à l'invention, le spectre des erreurs de gyromètres $\delta\omega_x$ est décalé en fréquence comme cela est illustré à la figure 7.

Le dispositif de mesure inertielle conforme à l'invention permet ainsi de supprimer le biais B. La puissance de bruit reste cependant inchangée, le biais B ayant été transformé en des pics de bruit B1 et B2 autour de la fréquence de la rotation fm=$\pm$β'/2π, avec β'=dβ/dt, la vitesse de rotation inertielle de l'équipage.

Un tel spectre de bruit a un effet bien moindre sur l'instrument AHRS et n'est pas gênant pour le pilote automatique AFCS (Automatic Flight Control System). En outre, comme la fréquence du spectre est connue, il est possible d'identifier son amplitude et sa phase pour ensuite l'éliminer.

La figure 8 est une illustration d'un autre exemple de réalisation d'un dispositif de mesure inertiel conforme à l'invention. Dans cet exemple de réalisation, le gyromètre gy est installé dans le tambour 4 et orienté de manière que son axe de sensibilité coïncide avec l'axe de rotation Y dudit tambour 4. Le gyromètre gy est solidaire en rotation de l'équipage mobile. Cet agencement présente l'avantage de fournir une mesure directe de la vitesse angulaire inertielle de l'équipage mobile, nécessaire à la loi de contrôle du moteur 6. On a donc $\omega_{y'} = \beta'$ et $\omega_y = \omega_{y'} - \alpha'$.

La figure 9 est une illustration schématique d'un traitement de données issues d'un dispositif de mesure inertiel conforme à l'invention et montré à la figure 8.

Dans cette variante de réalisation conforme à l'invention du dispositif de mesure inertiel, les moyens de calcul acquièrent d'une part les mesures des composantes de vitesse angulaire $\omega_{x'}$ et $\omega_{z'}$ autour des axes X' et Z' issues des gyromètres tournants gx et gz et d'autre part l'angle $\alpha$ du tambour 4 issu du capteur absolu sans contact 7. L'unité 10 de prétraitement opère un changement de repère qui peut s'exprimer mathématiquement par une multiplication matricielle telle que présentée ci-dessous :

$$\begin{bmatrix} \omega_x \\ \omega_z \end{bmatrix} = \begin{bmatrix} \cos\alpha & -\sin\alpha \\ \sin\alpha & \cos\alpha \end{bmatrix} \times \begin{bmatrix} \omega_{x'} \\ \omega_{z'} \end{bmatrix}$$

Les mesures des composantes de vitesse angulaire rapportées au repère X,Y,Z, à savoir $\omega_x$, $\omega_z$ et $\omega_y$ sont ensuite transmises à des algorithmes de traitement des moyens de calcul. Ces algorithmes de traitement sont spécifiques aux instruments AHRS et connus en tant que tel. Des exemples d'algorithmes sont décrits par exemple dans le document FR 2 614 694.

Dans un mode particulier de réalisation de l'invention, on améliore encore la réjection du biais affectant les mesures des composantes de vitesse angulaire inertielle selon les axes X et Z, en faisant en sorte que les fonctions sinus et cosinus de l'angle $\beta$ de l'équipage mobile par rapport au repère inertiel soient nulles en moyennes sur un nombre entier de tours.

A titre d'exemple, ce résultat peut être obtenu en mettant en oeuvre le procédé de commande et de régulation pour asservir sur une consigne $\omega_c$, la vitesse de rotation inertielle $\omega_i$ du moteur électrique 6 du dispositif de mesure inertiel, ledit procédé étant illustré à la figure 5.

Le procédé de commande et de régulation consiste à fixer la consigne $\omega_c$ et à mesurer la vitesse de rotation inertielle $\omega_i$.

On utilise ensuite une boucle de régulation interne pour amplifier la différence $\omega_c - \omega_i$ entre la consigne $\omega_c$ et la vitesse de rotation inertielle $\omega_i$, pour commander en couple Cp le moteur électrique 6 (c'est-à-dire une commande en courant dans les bobines du stator du moteur 6), délivrant ainsi en sortie de ladite boucle de régulation interne, une vitesse de rotation inertielle $\omega_i$ proche de la consigne $\omega_c$. La différence $\omega_c - \omega_i$ est élaborée par l'opérateur différence Op4 et amplifiée à l'aide de l'amplificateur A1.

Le moteur électrique 6 est schématisé à l'aide d'un intégrateur I1.

On effectue ensuite par l'intermédiaire d'un intégrateur I2, une intégration sur la vitesse de rotation inertielle $\omega_i$, de manière à obtenir l'angle de rotation inertiel $\beta$.

On calcule ensuite $\cos\beta$ et $\sin\beta$, à l'aide d'opérateurs respectifs Op5 et Op6. On obtient ainsi deux signaux représentatifs de la pondération appliquée par la rotation aux biais des gyromètres.

On calcule ensuite l'intégrale Is de $\sin\beta$ et l'intégrale Ic de $\cos\beta$, à l'aide des intégrateurs respectifs I3 et I4. Avec une rotation à vitesse angulaire inertielle uniforme, les deux signaux en sortie des intégrateurs I3 et I4 parcourent un cercle dont le centre est fixe.

On identifie ensuite les coordonnées Xc, Yc du centre du cercle défini par les valeurs de Ic et de Is, par l'intermédiaire d'un opérateur Op7. L'identification des coordonnées Xc, Yc est obtenue par exemple par la méthode des moindres carrées mise en oeuvre par l'opérateur Op7.

On applique ensuite un gain négatif k sur les valeurs de Xc et de Yc et on calcule les termes correctifs k.Xc.$\sin\beta$ et k.Yc.$\cos\beta$. Le terme correctif k.Xc.$\sin\beta$ est obtenu grâce à un amplificateur A4 de gain négatif k et grâce à un multiplicateur Op9. Le terme correctif k.Yc.$\cos\beta$ est obtenu grâce à un amplificateur A3 de gain négatif k et grâce à un multiplicateur Op8.

On additionne ensuite les termes correctifs précédents à la consigne $\omega_c$ pour réinjecter une consigne corrigée à l'entrée de la boucle de régulation interne, et ce grâce à un sommateur Op10. On rétroagit ainsi sur la consigne $\omega_c$ pour que les coordonnées du centre dudit cercle soient maintenues nulles.

On obtient ainsi des consignes d'évolution qui auront pour effet de maintenir le cercle défini par Is et Ic, centré en permanence sur l'origine du repère de représentation, sans erreur statique.

La variante de la figure 8 se différentie de celle illustrée par la figure 2a, en ce que le gyromètre gy n'est plus solidaire de la structure, mais installé sur le tambour 4 en rotation, son axe de sensibilité étant confondu avec l'axe de rotation 5. Le gyromètre gy fournit donc directement la vitesse de rotation inertielle $\omega_i = \omega_{y'}$. Cette vitesse peut être maintenue constante selon un exemple particulier de fonctionnement.

La vitesse angulaire de l'aéronef autour de l'axe Y, à savoir $\omega_y$, peut alors être calculée par soustraction à la mesure du gyromètre gy de la dérivée de la position angulaire $\alpha$ du tambour 4, selon la relation : $\omega_y = \omega_{y'} - \alpha'$, avec $\alpha' = d\alpha/dt$.

Selon un autre exemple de réalisation, la composante de vitesse angulaire du véhicule ou de l'aéronef autour de l'axe Y peut être mesurée directement par un quatrième gyromètre solidaire de la structure dudit véhicule ou aéronef. On évite ainsi l'utilisation de la dérivée de l'angle $\alpha$ pour reconstituer $\omega_y$. Une telle dérivée est génératrice de bruit.

Dans un autre exemple de réalisation, non représenté, le dispositif de mesure inertiel conforme à l'invention comprend un second équipage mobile en rotation autour de l'axe de rotation X, fixe par rapport à la structure. Le second équipage mobile comporte au moins deux gyromètres gy, gz dont les axes de sensibilité respectifs Y' et Z' sont orthogonaux entre eux et situés dans un plan perpendiculaire à l'axe de rotation X fixe. La projection des mesures des gyromètres gy, gz tournants sur lesdits axes Y et Z est alors aussi dépourvue de biais.

On dispose ainsi de 4 axes de mesure sans biais, ou tout au moins affectés de bais fortement atténués, dont un axe Z avec redondance de mesure, ce qui peut s'avérer utile du point de vue de la sécurité de fonctionnement du dispositif de mesure inertiel.

Un tel exemple de réalisation permet de disposer de mesures sans biais en roulis, en lacet et en tangage.

La figure 10 est une illustration schématique d'un traitement complémentaire des données issues d'un dispositif de mesure inertiel conforme à l'invention, permettant de supprimer la raie de bruit parasite représentée par les pics symétriques B1/B2 de la figure 7. Selon un certain mode de réalisation du dispositif de mesure inertiel, celui-ci comporte en outre des moyens de traitement complémentaires pour éliminer ladite raie résiduelle de bruit. L'unité 10 de prétraitement est ainsi avantageusement associée à un moyen de détection synchrone 13 et à un filtre passe-bas 14. Le moyen de détection synchrone 13, qui utilise par ailleurs les sinus et cosinus de l'angle β en tant qu'horloge de référence, permet ainsi de réaliser l'identification des pics B1/B2.

Grâce à l'invention, on effectue ainsi un changement de fréquence du biais, qui se trouve transformé d'un signal presque continu en un signal presque sinusoïdal dont l'effet sur l'AHRS est négligeable. Si la présence de ce signal sinusoïdal à la fréquence de rotation inertielle du tambour 4, appelée fréquence de modulation/démodulation fm= β'/2π, est gênante pour d'autres utilisateurs tels que l'AFCS, les moyens de traitement complémentaires permettent de la supprimer ou tout le moins de l'atténuer, par détection synchrone, filtrage passe-bas et soustraction aux mesures effectuées en repère tournant.

La figure 2b présente une autre illustration de l'exemple de réalisation du dispositif de mesure inertiel conforme à l'invention de la figure 2a. Le support 3 comporte deux paliers 3a, 3b coaxiaux supportant l'axe de rotation 5. L'équipage mobile comprend les gyromètres gx et gz d'axes de sensibilité respectifs X' et Z'. Le gyromètre gy fixe, dont l'axe de sensibilité est orienté selon l'axe Y, est fixé sur le support du palier 3b.

La figure 11 est une illustration partielle en coupe d'un exemple de réalisation du moyen d'alimentation 8 et d'échange de données par induction, du dispositif de mesure inertiel conforme à l'invention.

Le dispositif de mesure inertiel comprend par exemple des moyens inductifs pour alimenter électriquement au moins un équipage mobile d'une part et pour transférer les mesures effectuées, d'au moins un équipage mobile vers une partie ou une unité électronique fixe d'autre part.

Le dispositif à induction comporte à cet effet une base fixe 15, supportant l'arbre 5 par l'intermédiaire d'un roulement à billes 16 et une partie fixe 17 d'un noyau ferromagnétique en deux parties 17 et 18. La partie fixe 17 du noyau est solidaire de la base fixe 15 et comporte un enroulement 17a. La partie 18 du noyau est la partie tournante dudit noyau ferromagnétique. Cette partie est solidaire de l'arbre 5 tournant, et comporte un enroulement 18a. Les parties 17 et 18, associées respectivement à une unité électronique fixe et à une unité électronique tournante, sont séparées par un entrefer 19.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, telle que définie dans les revendications ci-jointes.

**Revendications**

**1.** Dispositif de mesure inertielle solidaire d'une structure d'un véhicule du genre aéronef pour lequel il convient de mesurer des vitesses et/ou accélérations dans un repère inertiel, un repère X,Y,Z étant lié à la structure et le dispositif comportant au moins un équipage mobile en rotation autour d'un axe de rotation Y fixe par rapport à ce repère X,Y,Z, cet équipage mobile comportant au moins : deux moyens de mesure dont des axes tournants de sensibilité respectifs X' et Z' sont orthogonaux entre eux et situés dans un plan perpendiculaire à l'axe de rotation fixe Y, un moteur électrique (6) pour entraîner en rotation l'équipage mobile, un moyen pour déterminer la position angulaire (α) de l'équipage mobile par rapport au repère X,Y,Z et des moyens de calcul (10,11) pour déterminer à partir de la position angulaire (α) de l'équipage mobile, la projection des mesures réalisées selon les axes tournants X',Z' par les moyens de mesure, sur les axes X et Z fixes par rapport au repère X,Y,Z et donc à la structure, **caractérisé en ce que** le moteur (6) comporte des moyens pour commander au moins une vitesse de rotation inertielle (ωᵢ) de l'équipage mobile par rapport au repère inertiel de telle sorte que les fonctions sinus et cosinus de l'angle (β) de cet équipage mobile par rapport au repère inertiel soient sensiblement nulles en moyennes sur un nombre entier de tours, la vitesse de rotation inertielle (ωᵢ) étant supérieure à une valeur de référence imposant un décalage en fréquence du biais des moyens de mesure, ce décalage étant supérieur à la largeur de bande de l'instabilité des biais des moyens de mesure.

**2.** Dispositif de mesure inertielle selon la revendication 1, **caractérisé en ce que** l'équipage mobile est un substrat tournant constituant le rotor du moteur (6), sur lequel sont agencés au moins lesdits deux moyens de mesure et des aimants permanents.

**3.** Dispositif de mesure inertielle selon la revendication 1 ou 2,
**caractérisé en ce que** ce dispositif de mesure inertielle comporte un moyen de mesure complémentaire fixé sur un support (3) de la structure et présentant un axe de sensibilité fixe par rapport à ladite structure, lequel est dirigé selon l'axe Y et est perpendiculaire au plan de rotation de l'équipage mobile.

**4.** Dispositif de mesure inertielle selon l'une des revendications 1 à 2,
**caractérisé en ce que** l'équipage mobile comporte un moyen de mesure complémentaire solidaire en rotation de l'équipage mobile et présentant un axe de sensibilité tournant confondu avec l'axe Y et perpendiculaire au plan de rotation de l'équipage mobile, ledit moyen de mesure complémentaire servant à réguler la vitesse de rotation inertielle $(\omega_i)$ de l'équipage mobile.

**5.** Dispositif de mesure inertielle selon la revendication 3 ou 4,
**caractérisé en ce que** les moyens de mesure sont des gyromètres (gx,gy,gz).

**6.** Dispositif de mesure inertielle selon la revendication 3 ou 4,
**caractérisé en ce que** les moyens de mesure sont des accéléromètres $(\gamma_x, \gamma_y, \gamma_z)$.

**7.** Dispositif de meure inertielle selon la revendication 3 ou 4, **caractérisé en ce qu'**au moins un moyen de mesure comporte un gyromètre (gx,gy,gz) et un accéléromètre $(\gamma_x, \gamma_y, \gamma_z)$.

**8.** Dispositif de mesure inertielle selon l'une des revendications 1 à 7,
**caractérisé en ce que** l'axe Y est compris dans un plan formé par les axes de roulis et de tangage du véhicule du genre aéronef.

**9.** Dispositif de mesure inertielle selon la revendication 3 ou 4,
**caractérisé en ce que** le moyen de mesure complémentaire comporte au moins un gyromètre (gy).

**10.** Dispositif de mesure inertielle selon l'une des revendications 1 à 9,
**caractérisé en ce que** le moyen pour déterminer la position angulaire $(\alpha)$ de l'équipage mobile dans le repère X,Y,Z est un capteur absolu (7) de mesure d'angles sans contact.

**11.** Dispositif de mesure inertielle selon l'une des revendications 1 à 9,
**caractérisé en ce que** le moyen pour déterminer la position angulaire $(\alpha)$ de l'équipage mobile dans le repère X,Y,Z est basé sur des capteurs à effet Hall du moteur électrique (6) ainsi que sur un capteur « tout ou rien ».

**12.** Dispositif de mesure inertielle selon la revendication 5 ou 7,
**caractérisé en ce que** les moyens de mesure sont des capteurs basés sur la technologie MEMS.

**13.** Dispositif de mesure inertielle selon l'une des revendications 1 à 12,
**caractérisé en ce que** ce dispositif de mesure inertielle comprend des moyens inductifs pour alimenter électriquement au moins un équipage mobile d'une part et pour transférer les mesures effectuées, d'au moins un équipage mobile vers une unité électronique fixe d'autre part.

**14.** Dispositif de mesure inertielle selon l'une des revendications 1 à 13,
**caractérisé en ce que** ce dispositif de mesure inertielle comprend des moyens de traitement additionnels (13,14) pour supprimer la raie de bruit parasite apparaissant à la fréquence de rotation inertielle de l'équipage mobile.

**15.** Procédé de mesure inertielle d'un véhicule du genre aéronef pour lequel il convient de mesurer des vitesses et/ou accélérations dans un repère inertiel, consistant à mettre en rotation au moins un équipage mobile en rotation autour d'un axe de rotation Y fixe par rapport à un repère X,Y,Z lié à une structure du véhicule, ledit équipage mobile comportant au moins deux moyens de mesure dont les axes de sensibilité respectifs X' et Z' sont tournants, orthogonaux entre eux et situés dans un plan perpendiculaire à l'axe de rotation fixe Y, à déterminer la position angulaire $(\alpha)$ de l'équipage mobile par rapport au repère X,Y,Z et à déterminer à partir de la position angulaire $(\alpha)$ de l'équipage mobile, la projection des mesures réalisées selon les axes tournants X',Z' par lesdits au moins deux moyens de mesure, sur les axes X et Z fixes par rapport au repère X,Y,Z et donc à la structure,
**caractérisé en ce que** ce procédé de commande et de régulation prévoit de commander au moins une vitesse de rotation inertielle $(\omega_i)$ de l'équipage mobile par rapport au repère inertiel, de telle sorte que les fonctions sinus et cosinus de l'angle $(\beta)$ de l'équipage mobile par rapport à un repère inertiel soient sensiblement nulles en moyennes sur un nombre entier de tours, la vitesse de rotation inertielle ($\omega_i$) étant supérieure à une valeur de référence imposant un décalage en fréquence du biais des moyens de mesure, ledit décalage étant supérieur à la largeur de bande de l'instabilité des biais desdits moyens de mesure.

16. Procédé de commande et de régulation pour asservir sur une consigne ($\omega_c$), la vitesse de rotation inertielle ($\omega_i$) du moteur électrique (6) d'un dispositif de mesure inertielle conforme à l'une des revendications 1 à 14,
**caractérisé en ce que** ce procédé de commande et de régulation prévoit de :

- fixer la consigne ($\omega_c$) et de mesurer la vitesse de rotation inertielle ($\omega_i$), par rapport au repère inertiel,
- utiliser une boucle de régulation interne pour amplifier la différence ($\omega_c$ - $\omega_i$) entre la consigne ($\omega_c$) et la vitesse de rotation inertielle ($\omega_i$), pour commander en couple le moteur électrique (6), délivrant ainsi en sortie de ladite boucle de régulation interne, la vitesse de rotation inertielle ($\omega_i$),
- effectuer une intégration sur la vitesse de rotation inertielle ($\omega_i$), de manière à obtenir l'angle de rotation inertiel ($\beta$),
- calculer cos$\beta$ et sin$\beta$,
- calculer l'intégrale (Is) de sin$\beta$ et l'intégrale (Ic) de cos$\beta$,
- identifier les coordonnées (Xc,Yc) du centre du cercle défini par les valeurs de (Ic) et de (Is),
- appliquer un gain (k) sur (Xc) et sur (Yc) et calculer un terme correctif qui est une fonction des variables k, $\beta$, Xc et Yc,
- et additionner ledit terme correctif à la consigne ($\omega_c$) pour rétroagir sur ladite consigne à l'entrée de la boucle de régulation interne de manière que lesdites intégrales Is et Ic soient nulles en moyenne sur un nombre entier de tours.

17. Procédé de commande et de régulation selon la revendication 16,
**caractérisé en ce que** l'identification des coordonnées (Xc,Yc) est obtenue par la méthode des moindres carrées.

18. Unité de mesure inertielle ou IMU (Inertial Measurement Unit),
**caractérisée en ce que** cette unité de mesure inertielle comporte au moins deux dispositifs de mesure inertielle conformes à l'une des revendications 1 à 14 et **en ce que** les axes de rotation desdits deux dispositifs sont perpendiculaires entre eux de manière que l'unité de mesure inertielle produise une mesure avec un bais atténué sur les trois dimensions.

19. Centrale de références primaires ou unité AHRS (Attitude, Heading, Reference System),
**caractérisée en ce que** cette centrale de références primaires comporte au moins un dispositif de mesure inertielle conforme à l'une des revendications 1 à 14.

20. Aéronef du genre hélicoptère,
**caractérisé en ce que** cet aéronef comporte au moins un dispositif de mesure inertiel conforme à l'une des revendications 1 à 14.

**Patentansprüche**

1. Trägheitsmessvorrichtung, die mit dem Aufbau eines Fahrzeugs vom Typ Luftfahrzeug fest verbunden ist, für das es zweckmäßig ist, Geschwindigkeiten und/oder Beschleunigungen in einem Trägheitsbezugssystem zu messen, wobei ein X,Y,Z-Bezugsystem mit dem Aufbau verbunden ist, und die Vorrichtung mindestens eine Einrichtung aufweist, die drehbeweglich um eine Drehachse Y ist, die bezüglich des X,Y,Z-Bezugssystems feststeht, wobei diese mobile Einrichtung mindestens aufweist: zwei Messvorrichtungen, deren Mess-Drehachsen X' bzw. Z' senkrecht aufeinanderstehen und in einer Ebene liegen, die senkrecht zu der festen Drehachse Y verläuft, einen elektrischen Motor (6) für den Drehantrieb der beweglichen Einrichtung, ein Mittel zum Bestimmen der Winkelstellung ($\alpha$) der beweglichen Einrichtung relativ zum X,Y,Z-Bezugssystem, und Rechenmittel (10, 11) zum Bestimmen, ausgehend von der Winkelstellung ($\alpha$) der beweglichen Einrichtung, der Projektion von Messungen, die entlang der Drehachsen X', Z' von den Messvorrichtungen ausgeführt wurden, auf die Achsen X und Z, die bezüglich des X,Y,Z-Bezugssystems und somit bezüglich des Aufbaus feststehen,
**dadurch gekennzeichnet, dass** der Motor (6) Mittel aufweist zum Steuern mindestens einer Trägheits-Drehgeschwindigkeit ($\omega_i$) der mobilen Einrichtung relativ zu dem Trägheits-Bezugssystem, derart, dass die Sinus- und Kosinusfunktionen des Winkels ($\beta$) dieser mobilen Einrichtung relativ zu dem Trägheitsbezugssystem im Mittel über eine ganze Anzahl von Umdrehungen im Wesentlichen Null betragen, wobei die Trägheits-Drehgeschwindigkeit ($\omega_i$) größer ist als ein Bezugswert, was zu einer Frequenzverschiebung der Messabweichung der Messvorrichtungen führt, wobei die Verschiebung größer ist als die Instabilitätsmessabweichungsbandbreite der Messvorrichtungen.

2. Trägheitsmessvorrichtung nach Anspruch 1,
**dadurch gekennzeichnet, dass** die bewegliche Einrichtung ein sich drehendes Substrat ist, welches den Rotor des Motors (6) bildet, auf dem mindestens die zwei Messvorrichtungen und Permanentmagnete angeordnet sind.

3.  Trägheitsmessvorrichtung nach Anspruch 1 oder 2, **dadurch gekennzeichnet, dass** die Trägheitsmessvorrichtung eine komplementäre Messvorrichtung aufweist, die auf einem Träger (3) des Aufbaus befestigt ist und eine bezüglich des Aufbaus ortsfeste Messachse aufweist, die entlang der Achse Y ausgerichtet ist und senkrecht auf der Drehebene der beweglichen Einrichtung steht.

4.  Trägheitsmessvorrichtung nach einem der Ansprüche 1 bis 2, **dadurch gekennzeichnet, dass** die bewegliche Einrichtung eine komplementäre Messvorrichtung aufweist, die drehfest mit der beweglichen Einrichtung verbunden ist, und eine sich drehende Messachse aufweist, die mit der Achse Y übereinstimmt und senkrecht auf der Drehebene der mobilen Einrichtung steht, wobei die komplementäre Messvorrichtung dazu dient, die Trägheits-Drehgeschwindigkeit ($\omega_i$) der mobilen Einrichtung zu regeln.

5.  Trägheitsmessvorrichtung nach Anspruch 3 oder 4, **dadurch gekennzeichnet, dass** die Messvorrichtungen Gyrometer (gx, gy, gz) sind.

6.  Trägheitsmessvorrichtung nach Anspruch 3 oder 4, **dadurch gekennzeichnet, dass** die Messvorrichtungen Beschleunigungsmesser ($\gamma_x$, $\gamma_y$, $\gamma_z$) sind.

7.  Trägheitsmessvorrichtung nach Anspruch 3 oder 4, **dadurch gekennzeichnet, dass** mindestens eine Messvorrichtung ein Gyrometer (gx, gy, gz) und einen Beschleunigungsmesser ($\gamma_x$, $\gamma_y$, $\gamma_z$) aufweist.

8.  Trägheitsmessvorrichtung nach einem der Ansprüche 1 bis 7, **dadurch gekennzeichnet, dass** die Achse Y in einer Ebene liegt, die durch die Rollachse und die Nickachse des Fahrzeugs vom Typ Luftfahrzeug gebildet wird.

9.  Trägheitsmessvorrichtung nach Anspruch 3 oder 4, **dadurch gekennzeichnet, dass** die komplementäre Messvorrichtung mindestens ein Gyrometer (gy) aufweist.

10. Trägheitsmessvorrichtung nach einem der Ansprüche 1 bis 9, **dadurch gekennzeichnet, dass** das Mittel zur Bestimmung der Winkellage ($\alpha$) der beweglichen Einrichtung in dem X,Y,Z-Bezugssystem ein kontaktloser Winkelmess-Absolutwertgeber (7) ist.

11. Trägheitsmessvorrichtung nach einem der Ansprüche 1 bis 9, **dadurch gekennzeichnet, dass** das Mittel zum Bestimmen der Winkelstellung ($\alpha$) der beweglichen Einrichtung in dem X,Y,Z-Bezugssystem auf Hall-Effekt-Detektoren des elektrischen Motors (6) sowie auf einem Alles-Oder-Nichts-Detektor beruht.

12. Trägheitsmessvorrichtung nach Anspruch 5 oder 7, **dadurch gekennzeichnet, dass** die Messvorrichtungen Detektoren auf der Basis der MEMS-Technologie sind.

13. Trägheitsmessvorrichtung nach einem der Ansprüche 1 bis 12, **dadurch gekennzeichnet, dass** die Trägheitsmessvorrichtung induktive Mittel aufweist, einerseits zum Versorgen mindestens einer beweglichen Einrichtung mit Strom, und andererseits um die ausgeführten Messungen von mindestens einer beweglichen Einrichtung an eine feststehende elektronische Einheit zu übertragen.

14. Trägheitsmessvorrichtung nach einem der Ansprüche 1 bis 13, **dadurch gekennzeichnet, dass** die Trägheitsmessvorrichtung zusätzliche Bearbeitungsmittel (13, 14) aufweist, um die Rauschbandbreite, die bei der Trägheits-Drehfrequenz der beweglichen Einrichtung auftritt, zu unterdrücken.

15. Verfahren zur Trägheitsmessung eines Fahrzeugs vom Typ Luftfahrzeug, für das es zweckmäßig ist, Geschwindigkeiten und/oder Beschleunigungen in einem Trägheitsbezugssystem zu messen, welches darin besteht, mindestens eine drehbewegliche Einrichtung in eine Drehbewegung um eine Drehachse Y zu versetzen, die bezüglich eines X,Y,Z-Bezugssystems feststeht, das mit einem Aufbau des Fahrzeugs fest verbunden ist, wobei die bewegliche Einrichtung mindestens zwei Messvorrichtungen aufweist, deren jeweilige Messachsen X' und Z' sich drehen, senkrecht zueinander stehen und in einer Ebene liegen, die senkrecht zu der festen Drehachse Y steht, die Winkelstellung ($\alpha$) der beweglichen Einrichtung relativ zum X,Y,Z-Bezugssystem zu bestimmen und ausgehend von der Winkelstellung ($\alpha$) der beweglichen Einrichtung die entlang der Drehachsen X', Z' von den mindestens zwei Messvorrichtungen ausgeführte Projektion auf die Achsen X und Z, die relativ bezüglich des X,Y,Z-Bezugssystems und somit bezüglich des Aufbaus feststehen, zu bestimmen, **dadurch gekennzeichnet, dass** dieses Steuer- und Regelungsverfahren vorsieht, mindestens eine Trägheits-Drehgeschwindigkeit ($\omega_i$) der mobilen Einrichtung bezüglich des Trägheitsbezugssystems derart zu steuern, dass die Sinus- und Kosinusfunktionen des Winkels ($\beta$) der beweglichen Einrichtung relativ zu einem Trägheitsbezugssystem im Mittel über eine ganze Anzahl von Umdrehungen Null sind, wobei die Trägheits-Drehgeschwindigkeit ($\omega_i$) größer als ein Bezugswert ist, was zu einer Frequenzverschiebung der Messabweichung der Messvorrichtungen führt, wobei die Verschiebung größer ist als die Instabilitätsmessabweichungsbandbreite der Messvorrichtungen.

16. Steuer- und Regelungverfahren zum Regeln der Trägheits-Drehgeschwindigkeit ($\omega_i$) des elektrischen Motors (6) einer Trägheitsmessvorrichtung nach einem der Ansprüche 1 bis 14 auf einen Sollwert ($\omega_c$),
**dadurch gekennzeichnet, dass** das Steuer- und Regelverfahren vorsieht:

- Festlegen des Sollwerts ($\omega_c$) und Messen der Trägheits-Drehgeschwindigkeit ($\omega_i$) relativ zu dem Trägheitsbezugssystem,
- Anwenden einer internen Regelschleife zum Verstärken der Differenz ($\omega_c$ - $\omega_i$) zwischen dem Sollwert ($\omega_c$) und der Trägheits-Drehgeschwindigkeit ($\omega_i$), um das Drehmoment des elektrischen Motors (6) zu steuern, wodurch somit am Ausgang der internen Regelschleife die Trägheits-Drehgeschwindigkeit ($\omega_i$) geliefert wird,
- Ausführen einer Integration der Trägheits-Drehgeschwindigkeit ($\omega_i$), derart, dass der Trägheits-Drehwinkel ($\beta$) erhalten wird,
- Berechnen von $\cos\beta$ und $\sin\beta$,
- Berechnen des Integrals (ls) von $\sin\beta$ und des Integrals (lc) von $\cos\beta$,
- Identifizieren der Koordinaten (Xc, Yc) des Mittelpunkts des Kreises, der von den Werten von (lc) und (ls) definiert wird,
- Anwenden eines Verstärkungsfaktors (k) auf (Xc) und (Yc) und Berechnen eines Korrekturausdrucks, der von den Variablen k, $\beta$, Xc und Yc abhängt,
- und Addieren des Korrekturausdrucks zu dem Sollwert ($\omega_c$), um am Eingang der internen Regelschleife so auf den Sollwert ($\omega_c$) zurückzuwirken, dass die Integrale ls und lc im Mittel über eine ganze Anzahl von Umdrehungen Null betragen.

17. Steuer- und Regelverfahren nach Anspruch 16,
**dadurch gekennzeichnet, dass** die Identifizierung der Koordinaten (Xc, Yc) erhalten wird durch die Methode der kleinsten Quadrate.

18. Trägheitsmesseinheit oder IMU (Inertial Measurement Unit),
**dadurch gekennzeichnet, dass** diese Trägheitsmesseinheit mindestens zwei Trägheitsmessvorrichtungen nach einem der Ansprüche 1 bis 14 aufweist, und dadurch, dass die Drehachsen der beiden Vorrichtungen senkrecht zueinander derart verlaufen, dass die Trägheitsmesseinheit eine Messung erzeugt mit einer abgeschwächten Messabweichung in den drei Dimensionen.

19. Zentrale von Haupt-Bezugsfakoren oder AHRS(Attitude, Heading, Reference System)-Einheit,
**dadurch gekennzeichnet, dass** diese Zentrale von Haupt-Bezugsfaktoren mindestens eine Trägheitsmessvorrichtung nach einem der Ansprüche 1 bis 14 aufweist.

20. Luftfahrzeug vom Typ Hubschrauber,
**dadurch gekennzeichnet, dass** dieses Luftfahrzeug mindestens eine Trägheitsmessvorrichtung nach einem der Ansprüche 1 bis 14 auf weist.

## Claims

1. Inertial measurement device secured to a structure of a vehicle of the aircraft kind for which it is desired to measure speeds and/or accelerations in an inertial frame of reference, a frame of reference X,Y,Z being tied to the structure and the device comprising at least one piece of mobile equipment mobile in rotation about an axis of rotation Y fixed relative to said frame of reference X,Y,Z, said piece of mobile equipment comprising at least: two measurement means, the respective rotary sensitivity axes X' and Z' of which are mutually orthogonal and situated in a plane perpendicular to the fixed axis of rotation Y, an electric motor (6) for driving in rotation the piece of mobile equipment, a means for determining the angular position ($\alpha$) of the piece of mobile equipment relative to the frame of reference X,Y,Z and calculation means (10,11) for determining from the angular position ($\alpha$) of the piece of mobile equipment, the projection of the measurements performed along the rotary axes X',Z' by the measurement means, onto the axes X and Z fixed relative to the frame of reference X,Y,Z and thus to the structure,
**characterised in that** the motor (6) comprises means for controlling at least one inertial speed of rotation ($\omega_i$) of the piece of mobile equipment relative to the inertial frame of reference in such a manner that the sine and cosine functions of the angle ($\beta$) of said piece of mobile equipment mobile relative to the inertial frame of reference are substantially zero on average over an integer number of revolutions, the inertial speed of rotation ($\omega_i$) being greater than a reference value imposing a frequency shift of the bias of the measurement means, said shift being greater than the instability bandwidth of the biases of the measurement means.

2. Inertial measurement device according to claim 1,
**characterised in that** the piece of mobile equipment is a rotary substrate constituting the rotor of the motor (6), on which at least said two measurement means and permanent magnets are arranged.

3. Inertial measurement device according to claim 1 or 2,
   **characterised in that** said inertial measurement device comprises a complementary measurement means fixed on a support (3) of the structure and having a sensitivity axis fixed relative to said structure, which axis is directed along the axis Y and is perpendicular to the plane of rotation of the piece of mobile equipment.

4. Inertial measurement device according to one of claims 1 to 2,
   **characterised in that** the piece of mobile equipment comprises a complementary measurement means integral in rotation with the piece of mobile equipment and having a rotary sensitivity axis coinciding with the axis Y and perpendicular to the plane of rotation of the piece of mobile equipment, said complementary measurement means serving to regulate the inertial speed of rotation ($\omega_i$) of the piece of mobile equipment.

5. Inertial measurement device according to claim 3 or 4,
   **characterised in that** the measurement means are gyrometers (gx,gy,gz).

6. Inertial measurement device according to claim 3 or 4,
   **characterised in that** the measurement means are accelerometers ($\gamma_x$, $\gamma_y$, $\gamma_z$).

7. Inertial measurement device according to claim 3 or 4,
   **characterised in that** at least one measurement means comprises a gyrometer (gx,gy,gz) and an accelerometer ($\gamma_x$, $\gamma_y$, $\gamma_z$).

8. Inertial measurement device according to one of claims 1 to 7,
   **characterised in that** the axis Y is comprised in a plane formed by the roll and pitching axes of the vehicle of the aircraft kind.

9. Inertial measurement device according to claim 3 or 4,
   **characterised in that** the complementary measurement means comprises at least one gyrometer (gy).

10. Inertial measurement device according to one of claims 1 to 9,
    **characterised in that** the means for determining the angular position ($\alpha$) of the piece of mobile equipment in the X,Y,Z frame of reference is a contactless absolute sensor (7) for measuring angles.

11. Inertial measurement device according to one of claims 1 to 9,
    **characterised in that** the means for determining the angular position ($\alpha$) of the piece of mobile equipment in the X,Y,Z, frame of reference is based on Hall effect sensors of the electric motor (6) as well as an on/off sensor.

12. Inertial measurement device according to claim 5 or 7, **characterised in that** the measurement means are sensors based on MEMS technology.

13. Inertial measurement device according to one of claims 1 to 12,
    **characterised in that** said inertial measurement device comprises inductive means for electrically supplying at least one piece of mobile equipment on the one hand and for transferring the measurements carried out, from at least one piece of mobile equipment, to a fixed electronic unit on the other hand.

14. Inertial measurement device according to one of claims 1 to 13,
    **characterised in that** said inertial measurement device comprises additional processing means (13, 14) for eliminating the interfering noise spectrum line appearing at the inertial rotation frequency of the piece of mobile equipment.

15. Inertial measurement method for a vehicle of the aircraft kind for which it is desired to measure speeds and/or accelerations in an inertial frame of reference, consisting of setting in rotation at least one piece of mobile equipment mobile in rotation about an axis of rotation Y fixed relative to a frame of reference X,Y,Z tied to a structure of the vehicle, said piece of mobile equipment comprising at least two measurement means, the respective sensitivity axes X' and Z' of which are rotary, mutually orthogonal and situated in a plane perpendicular to the fixed axis of rotation Y, of determining the angular position ($\alpha$) of the piece of mobile equipment relative to the frame of reference X,Y,Z and of determining from the angular position ($\alpha$) of the piece of mobile equipment, the projection of the measurements performed along the rotary axes X',Z' by said at least two measurement means, onto the fixed axes X and Z relative to the frame of reference X,Y,Z and thus the structure, **characterised in that** said control and regulation method provides for controlling at least one inertial speed of rotation ($\omega_i$) of the piece of mobile equipment relative to the inertial frame of reference in such a manner that the sine and cosine functions of the angle ($\beta$) of the piece of mobile equipment relative to an inertial frame of reference are substantially zero on average over an integer number of revolutions, the inertial speed of rotation ($\omega_i$) being greater than a reference value imposing a frequency shift of the bias of said measurement means, said shift being greater than the instability bandwidth of the biases of said measurement means.

16. Control and regulation method for servo-controlling on a setpoint ($\omega_c$), the inertial speed of rotation ($\omega_i$) of the electric motor (6) of an inertial measurement device in accordance with one of claims 1 to 14, **characterised in that** said control and regulation method provides for:

- setting the setpoint ($\omega_c$) and measuring the inertial speed of rotation ($\omega_i$) relative to the inertial frame of reference,
- using an internal regulation loop to amplify the difference ($\omega_c$ - $\omega_i$) between the setpoint ($\omega_c$) and the inertial speed of rotation ($\omega_i$), to apply torque control to the electric motor (6), thereby delivering the inertial speed of rotation ($\omega_i$) at the output from said internal regulation loop,
- performing an integration on the inertial speed of rotation ($\omega_i$) so as to obtain the inertial angle of rotation ($\beta$),
- calculating $\cos\beta$ and $\sin\beta$,
- calculating the integral (Is) of $\sin\beta$ and the integral (Ic) of $\cos\beta$,
- identifying the coordinates (Xc,Yc) of the centre of the circle defined by the values of (Ic) and (Is),
- applying a gain (k) to (Xc) and to (Yc) and calculating a correction term which is a function of the variables k, $\beta$, Xc and Yc,
- and adding said correction term to the setpoint ($\omega_c$) to apply feedback to said setpoint at the input of the internal regulation loop so that said integrals Is and Ic are zero on average over an integer number of revolutions.

17. Control and regulation method according to claim 16, **characterised in that** the identification of the coordinates (Xc, Yc) is obtained by the least squares method.

18. Inertial measurement unit or IMU, **characterised in that** said inertial measurement unit comprises at least two inertial measurement devices in accordance with one of claims 1 to 14 and **in that** the axes of rotation of said two devices are mutually perpendicular so that the inertial measurement unit produces a measurement with an attenuated bias on the three dimensions.

19. Primary reference unit or AHRS unit (Attitude, Heading, Reference System), **characterised in that** said primary reference unit comprises at least one inertial measurement device in accordance with one of claims 1 to 14.

20. Aircraft of the helicopter kind, **characterised in that** said aircraft comprises at least one inertial measurement device in accordance with one of claims 1 to 14.

Fig.1

Fig.2a

EP 2 395 322 B1

Fig.3

Fig.4

Fig.5

Fig.6

Fig.7

Fig.9

Fig.8

Fig.10

Fig.2b

Fig.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3509765 A
- WO 2007111978 A
- US 3424010 A
- JP 02078961 A
- FR 2832136
- US 7066004 B
- EP 0292339 B1
- FR 2614694